Europäisches Patentamt

European Patent Office

Office européen des brevets

(11) Veröffentlichungsnummer: **0 326 564 B1**

(12) **EUROPÄISCHE PATENTSCHRIFT**

(45) Veröffentlichungstag der Patentschrift:
27.02.91 Patentblatt 91/09

(21) Anmeldenummer: 87906296.6

(22) Anmeldetag: 16.09.87

(86) Internationale Anmeldenummer:
PCT/EP87/00525

(87) Internationale Veröffentlichungsnummer:
WO 88/01951 24.03.88 Gazette 88/07

(51) Int. Cl.⁵: **B60K 41/02, // F16D25/12**

---

(54) **VERFAHREN ZUR STEUERUNG EINER AUTOMATISCHEN KRAFTFAHRZEUGKUPPLUNG.**

---

(30) Priorität: 19.09.86 PCT/EP86/00544

(43) Veröffentlichungstag der Anmeldung:
09.08.89 Patentblatt 89/32

(45) Bekanntmachung des Hinweises auf die
Patenterteilung:
27.02.91 Patentblatt 91/09

(84) Benannte Vertragsstaaten:
DE FR GB SE

(56) Entgegenhaltungen:
EP-A- 0 130 792
DE-A- 3 447 676
GB-A- 2 173 273
GB-A-21 659 14

(56) Entgegenhaltungen:
Patent Abstracts of Japan, Band 9, Nr. 311
(M-436)(2034), 7. Dezember 1985 & JP-A
-60-146923 (ISUZU) 2. August 1985
Patent Abstracts of Japan, Band 8, Nr. 35
(M-276)(1472), 15. Februar 1984 & JP-A
-58-191635 (ISUKU) 8. November 1983

(73) Patentinhaber: ZAHNRADFABRIK
FRIEDRICHSHAFEN AKTIENGESELLSCHAFT
Löwentaler Strasse 100 Postfach 2520
D-7990 Friedrichshafen 1 (DE)

(72) Erfinder: PETZOLD, Rainer
Oberhofstra e 79
D-7990 Friedrichshafen (DE)
Erfinder: WIENCEK, Norbert
Ittendorferstra e 1
D-7759 Hagnau (DE)

(74) Vertreter: Raue, Reimund
Zahnradfabrik Friedrichshafen AG Löwentaler
Strasse 100 Postfach 2520
D-7990 Friedrichshafen 1 (DE)

**Beschreibung**

Diese Erfindung betrifft ein verfahren zur Steuerung einer automatischen Kraftfahrzeugkupplung nach dem Oberbegriff von Anspruch 1.

Aus der Beschreibungseinleitung der DE-A-34 47 676 sind Verfahren und, Einrichtungen zur automatischen Steuerung einer Kupplung bekannt, die zwischen einem Antriebsmotor und vorrangig einem automatisch zu schaltenden Wechselgetriebe eines Kraftfahrzeuges angeordnet ist.

Das Einrücken und die Einrückgeschwindigkeit wird, wie beschrieben, vom Drehzahlanstieg der Motordrehzahl oder auch von der Motordrehzahl selbst beeinflußt.

Weiter ist bekannt, die Änderungsgröße der Motordrehzahl aus der Betatigungsgeschwindigkeit vom Gaspedal für die Einrückgeschwindigkeit der Kupplung zu verwenden. Und schließlich ist aus der DE-A-34 47 676 bekannt, zu Ermittlung einer Einrückgeschwindigkeit eine maximale Beschleunigungsdrehzahl des Motors elektronisch zu speichern und mit einer tatsächlich gemessenen Motordrehzahl während der Beschleunigung zu vergleichen und bei einer gleichen oder kleineren Istdrehzahl eine Auskuppelung zu veranlassen oder die Kupplung ausgekuppelt zu belassen und bei einer höheren Istdrehzahl das Schließen der Kupplung zu veranlassen. Da der beschriebene Ablauf in relativ kurzen Zeitabständen erfolgt, soll damit ein sanfter, aber doch effizienter Start eines Fahrzeuges sichergestellt werden. Weiter soll die Lebensdauer der automatischen Kupplung verlängert und die Fahrleistung des Fahrzeuges verbessert werden, indem eine Beschleunigung des Motors im Leerlauf vermieden und der Schlupf der teilweise eingerückten Kupplung minimiert wird. Und schließlich soll ein schnelles Starten des Fahrzeuges ermöglicht werden, ohne daß der Motor überlastet wird.

Diese Einrichtung mag sich beim Einsatz in einem Pkw bewähren, für ein Nutzfahrzeug ist sie jedoch nicht geeignet, weil die Ansprechzeit der beschriebenen Steuerung zu langsam ist. Dies führt bei den großen Dieselmotoren in Nutzfahrzeugen zu einem zu weiten Hochlaufen der Motordrehzahl oder zu einer starken Momentüberhöhung. Die beim Schließen der Kupplung entstehenden schnellen Drehmomenteinbrüche bei den empfindlichen Nkw-Antriebssträngen führen zu nicht vertretbaren Schwingungen.

Es ist deshalb Aufgabe der Erfindung, ein verfahren zur automatischen Schaltung einer Kupplung nach dem Oberbegriff von Anspruch 1 so weiterzuentwickeln, daß sie auch für Nutzfahrzeuge, insbesondere schwere Nutzfahrzeuge, einsetzbar ist und die beschriebenen Vorteile weitestgehend erbringt.

Diese Aufgabe wird mit den kennzeichnenden Merkmalen vom Anspruch 1 erfüllt. Während bei bisher bekannten automatischen Kupplungssteuerungen der Kuppelvorgang erst beginnt, wenn bereits ein Drehzahlanstieg der Motordrehzahl von dem elektronischen Steuergerät erkannt wird, kann das Schließen der Kupplung nach der Anmeldung sofort mit z. B. der Betätigung des Gaspedales beginnen. Damit wird ein schnellstmöglicher Momentenaufbau garantiert. Die Ansprechverzögerungen, die sich zwischen der Gaspedalbetätigung und der Wirkung des elektronischen Gases an der Drosselklappe bzw. an der Einspritzpumpe und im Motor selbst, ergeben, werden vermieden. Mit der Abberufung und dem Wirksamwerden einer z. B. von der Stellung des Gaspedales abhängigen Grund-Einrückgeschwindigkeit wird nicht nur eine schnelle, sondern auch eine den Anfahrwiderständen angepaßte, also auch qualitativ gute Grund-Einrückgeschwindigkeit für das Schließen der Kupplung wirksam. Die Leistungsanforderung des Fahrers, die sich in dem Grad der Gaspedalbetätigung ausdrückt, wirkt in gleicher Weise auf die Höhe der Grund-Einrückgeschwindigkeit der Kupplung. Ein Zurückhalten der Motoransteuerung infolge einer zu trägen Kupplungsbetätigung ist also in keinem Fall notwendig.

Die von der Leistungsanforderung an den Motor abhängige Grund-Einrückgeschwindigkeit wirkt in dieser Form nur in der Anfangsphase des Kuppelvorganges. Sie bleibt aber in den weiteren Phasen die Kuppelungsführungsgröße, die über Korrekturen noch besser an die unterschiedlichsten Anfahrwiderstände und in Abhängigkeit von qualitativen Forderungen an das Anfahren angepaßt wird. Wird diese von der Gaspedalstellung abhängige Grund-Einrückgeschwindigkeit in einer Kennlinie im elektronischen Steuergerät abgelegt und mit einer genügend großen Aufteilung des gesamten Stellweges vom Gaspedal auch in genügend feinen Abständen abgerufen, wird Zeit, die bei komplizierten Rechnungen im elektronischen Steuergerät anfallen würde, eingespart. Wird diese Kennlinie dann auch noch motorspezifisch erstellt, beginnt der Schließvorgang der Kupplung nicht nur schnell, sondern der Kuppelvorgang ist auch von einer hohen Qualität.

Zur Absicherung aller Betriebszustände ist es nötig, in einer zweiten Phase des Einkuppelvorganges die wirksame Grund-Einrückgeschwindigkeit über einen Korrekturfaktor, der aus der Änderung der Differenzdrehzahl gebildet wird, an die unterschiedlichsten Anfahrwiderstände, auch in extremen Anfahrsituationen, noch besser anzupassen. Dabei wird dieser Korrekturfaktor mit der Grund-Einrückgeschwindigkeit multipliziert und in einfacher Weise so gestaltet, daß er nur dann wirksam ist, wenn die Motor-Abtriebs- und

2

die Getriebe-Eingangsdrehzahl in einem nicht gewollten Verhältnis sich zueinander verändern.

Mit einem weiteren Beeinflussungsmechanismus in Form eines Korrekturfaktors kann in der dritten Phase des Einkuppelvorganges nach dem Erreichen der höchsten Motordrehzahl der Gradient der Motordrehzahl durch eine Verlangsamung oder Beschleunigung der Kuppelung in einen für den endgültigen Schließvorgang günstigen Wert bzw. Winkel gebracht werden. Die Multiplikation der Einrückgeschwindigkeit mit diesem Korrekturfaktor, der, wie auch der erste Korrekturfaktor, in einer Kennlinie gespeichert in dem elektronischen Steuergerät schnell zur Verfügung steht, ergibt eine einfache Bearbeitung, weil komplizierte Rechnungen nicht erforderlich sind. Eine besonders hohe Qualität des Kuppelvorganges ist möglich, wenn kurz vor dem Erreichen der Synchrondrehzahl die Kupplung nochmals kurz in Richtung Öffnen verstellt wird. Durch die Beeinflussung des Zeitpunktes dieser Öffnung und der Öffnungsgeschwindigkeit - negative Einrückgeschwindigkeit - steht ein weiterer Mechanismus zur Verfügung, der in Verbindung mit der schnellen Wirkung der Grund-Einrückgeschwindigkeit den Kuppelvorgang einer Kupplung beim Anfahren optimieren kann. Damit ist ein stoßfreies Schließen der Kupplung auch in den extremsten Situationen möglich.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung. Weitere Einzelheiten der Erfindung werden anhand von Zeichnungen und einem Ausführungsbeispiel erläutert. Es zeigen

Fig. 1 ein Blockschaltbild eines Antriebsstranges in Verbindung mit einer automatischen Kupplung.

Fig. 2 eine Kennlinie für die Grund-Einrückgeschwindigkeit in Abhängigkeit von der Gaspedalverstellung.

Fig. 3 eine Kennlinie für einen Korrekturfaktor in Abhängigkeit von der Änderung der Differenzdrehzahlen.

Fig. 4 eine Kennlinie für einen Korrekturfaktor in Abhängigkeit von der Änderung der Motordrehzahl.

Fig. 5 eine Kennlinie für den Öffnungsbeginn der Kupplung kurz vor dem Erreichen der Synchrondrehzahl in Abhängigkeit von der Änderung der Differenzdrehzahl.

Fig. 6 eine Kennlinie für die Öffnungsgeschwindigkeit der Kupplung kurz vor dem Erreichen der Synchrondrehzahl in Abhängigkeit von der Änderung der Differenzdrehzahl.

Fig. 7 Gaspedal - E-Gas -, Motor- und Getriebedrehzahlkurven in Gegenüberstellung zum Stand der Technik.

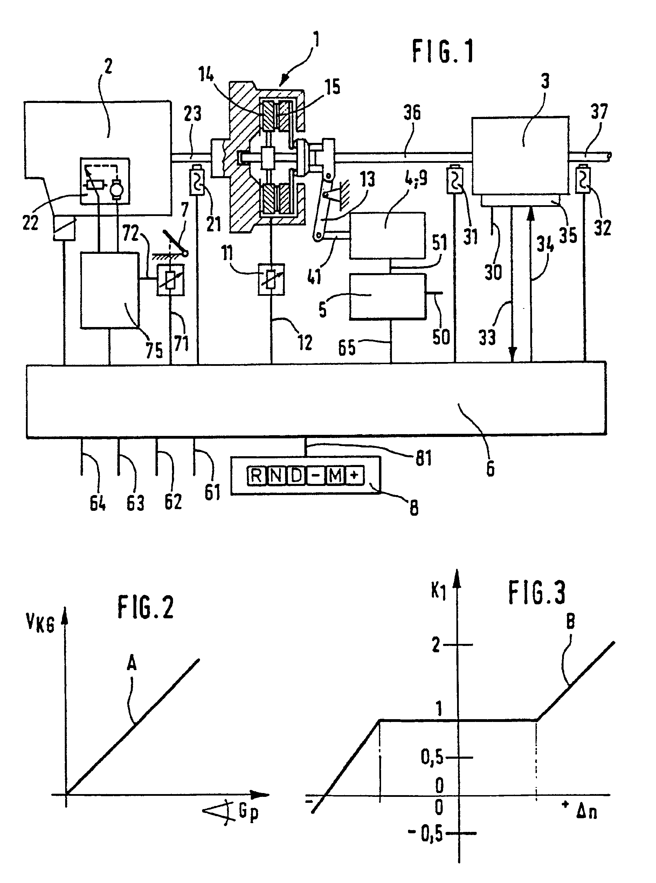

In Fig. 1 ist mit 1 die automatische Kupplung, die z. B. als Trockenkupplung ausgeführt sein kann, die über Federn geschlossen und über eine Stelleinrichtung 4 geöffnet wird, dargestellt. Die Kupplung 1 ist zwischen Antriebsmotor 2 und einem Getriebe 3, z. B. einem automatischen und synchronisierten Wechselgetriebe, im Antriebsstrang 2, 1, 3 angeordnet. Drehzahlfühler 21, 31, 32 ermitteln die Motordrehzahl $n_M$, die Getriebe-Eingangsdrehzahl $n_{GE}$ und die Getriebe-Abtriebsdrehzahl $n_{ab}$ und sind z. B. an der Motor-Abtriebswelle 23 der Getriebe-Eingangswelle 36 und der Getriebe-Abtriebswelle 37 angeordnet. Das elektronische Steuergerät 6, das in bekannter, nicht dargestellter Weise aus einer Eingabeeinheit, einer Ausgabeeinheit, einem Speicher und einem oder mehreren Mikro-Prozessoren besteht, erhält Informationen über die Leitungen 81 von einem Fahrschalter 8, der z. B. eine Neutralstellung N, eine Rückwärtsfahrstellung R, eine Vorwärtsfahrstellung D sowie einen Schalter für eine manuelle Fahrweise M hat. Mit den Tasten Minus und Plus lassen sich bei jeder Betätigung in Verbindung mit der Taste M Hoch- und Rückschaltungen jeweils über einen Gang durchführen. Weitere Informationen erhält das elektronische Steuergerät 6 über die Stellung der Fußbremse(Leitung 61), der Handbremse(Leitung 62), des Kick-down-Schalters(Leitung 63) sowie der Motorbremsbetätigung(Leitung 64). Der Weg der Kupplung 1 wird über eine Wegmeßeinrichtung 11 erfaßt und über die Leitung 12 gleichfalls dem elektronischen Steuergerät als Information zugeführt. Das Getriebe 3 hat noch einen Schaltventilblock 35, der seine Schaltbefehle über die Leitung 34 vom elektronischen Steuergerät 6 erhält, wobei die jeweilige Gangstellung über die Leitung 33 dem elektronischen Steuergerät zurückgemeldet wird. Eine Hilfskraft, z. B. Luft oder Hydraulikflüssigkeit, wird über die Leitung 30 dem Schaltventilblock 35 zum Schalten der Gänge zugeleitet.

In Fig. 2 ist eine Kennlinie A dargestellt, die motorspezifisch, vorrangig nach der Motorcharakteristik, erstellt wird. Die Kennlinie ist weiterhin so gestaltet, daß aus dem Winkel oder dem Weg der Gaspedalverstellung sich, ohne zusätzliche Rechnungen durchführen zu müssen, eine Grund-Einrückgeschwindigkeit $V_{KG}$ der Kupplung 1 ableiten läßt.

In Fig. 3 ist der Korrekturfaktor K1 über der Änderung der Differenzdrehzahl $\Delta n$ zwischen Motordrehzahl $n_M$ und GetriebeEingangsdrehzahl $n_{GE}$ aufgetragen und die Kennlinie B ist so ermittelt, daß die Grund-Einrückgeschwindigkeit $V_{KG}$ so beeinflußt wird, daß eine definierte Reibarbeit in der Kupplung durch unterschiedlich anfallende Anfahrwiderstände - Beladung, Fahrbahn und Fahrprofil - nicht überschritten wird. Weiterhin ist sie so gestaltet, daß die Motordrehzahl $n_M$ geringfügig geringer steigt als die zeitlich später einsetzende Getriebe-Eingangsdrehzahl $n_{GE}$ und schließlich ist die Kennlinie B so gestaltet, daß geringe Abweichungen der Änderung der Differenzdrehzahl nach Plus und in einem etwas größeren Umfang nach Minus zu einem Korrekturfaktor I führen, der, mit der Grund-Einrückgeschwindigkeit $V_{KG}$ multipliziert, zu keiner Veränderung der wirksamen Einrückgeschwindigkeit $V_K$ führt.

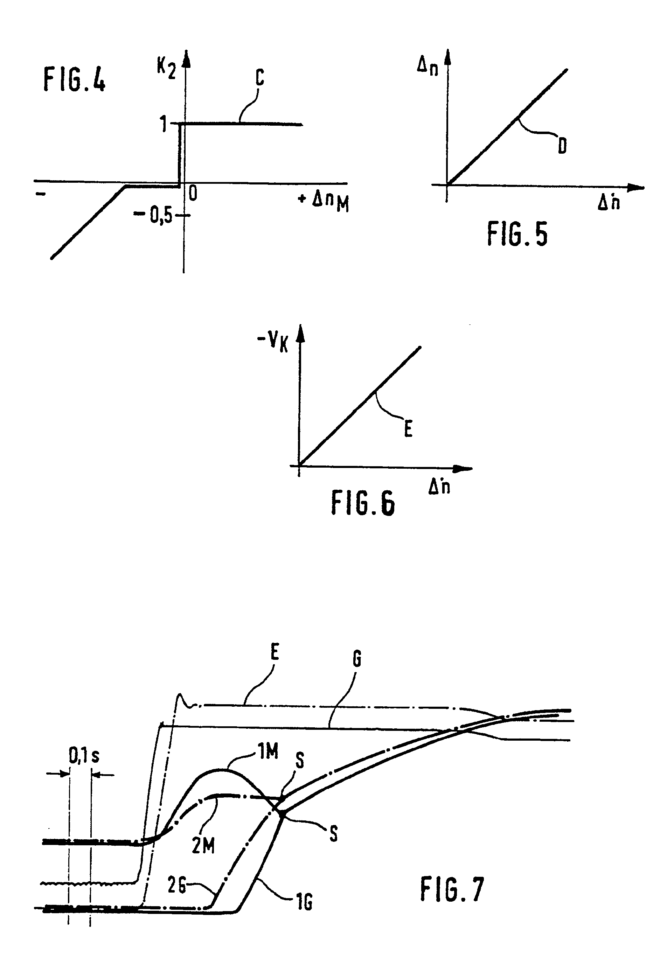

Nach Fig. 4 ist ein weiterer Korrekturfaktor K2 als Funktion der Änderung der Motordrehzahl $\Delta n_M$ dargestellt. Die Kennlinie C ist dabei so gestaltet, daß bei einer positiven Änderung der Motordrehzahl der Korrekturfaktor 1 ist und bei der Multiplizierung dieses Faktors mit der Einrückgeschwindigkeit $V_K$ zu keiner Veränderung führt. Bei gleichbleibender Motordrehzahl und in einem geringen Bereich eines negativen Ansteigens der Motordrehzahl ist dieser Korrekturfaktor 0, so daß die Kupplung in diesem Bereich nicht weiter schließt. Ist der Drehzahlabfall jedoch größer, erfolgt eine Korrektur in Richtung Wiederöffnen der Kupplung (negative Einrückgeschwindigkeit). Mit dem Korrekturfaktor 2 wird damit der Abfallgradient der Motordrehzahl $n_M$ beeinflußt, der für eine gute Qualität eines Kuppelvorganges von großer Bedeutung ist. Die Kennlinie C ist ebenfalls in dem elektronischen Steuergerät 6 gespeichert. Kurz vor Erreichen der Synchrondrehzahl wird die Kupplung nochmals in Abhängigkeit von der Änderung der Differenzdrehzahlen geöffnet. Mit der Kennlinie D in Fig. 5 wird dabei der Beginn des Öffnens und mit der Kennlinie E nach Fig. 6 die Öffnungsgeschwindigkeit (negative Einrückgeschwindigkeit) ermittelt. Beide Kennlinien sind ebenfalls im elektronischen Steuergerät 6 gespeichert. Fig. 7 zeigt den Verlauf eines Anfahrvorganges über der Zeit. Mit der Kurve G ist die Gaspedalstellung und mit der Kurve E die Wirkung des E-Gases aufgezeichnet. In den Kurven 1M, 1G und 2M, 2G sind die Motordrehzahlen und die Getriebe-Eingangsdrehzahlen zwischen dem Stand der Technik und dem Anmeldegegenstand gegenübergestellt. Mit 1M und 1G ist dabei der Stand der Technik bezeichnet. Die Einrichtung wirkt wie folgt : Der Antriebsmotor 2 kann nur in der Stellung N des Fahrschalters 8 angelassen werden. Mit der Betätigung des Fahrschalters, z. B. in Vorwärtsfahrtrichtung D, wird ein Anfahrgang infolge eines Befehles vom elektronischen Steuergerät 6 über die Leitung 33 an den Schaltventilblock 35 im Getriebe 3 eingelegt. Mit der Aktivierung einer Motorführungsgröße, z. B. der Betätigung des Gaspedales 7, wird, in Abhängigkeit des Betätigungswinkels oder -weges, die E-Gas-Einrichtung aktiviert, die die Drosselklappe bzw. die Einspritzpumpe 22 betätigt, so daß die Motor-Abtriebswelle 23 beschleunigt wird. Gleichzeitig mit der Betätigung des Gaspedales 7 und in Abhängigkeit des Betätigungswinkels oder -weges wird im elektronischen Steuergerät 6 eine Grund-Einrückgeschwindigkeit $V_{KG}$ für die Kupplung 1 abgerufen und über die Leitung 65 an die Steuereinrichtung 5, z. B. ein Magnetventil, geleitet, das eine über die Leitung 50 kommende Hilfskraft, z. B. Luft oder Öl, über eine weitere Leitung 51 einer Stelleinrichtung 4 zuführt, die über eine Betätigungsstange 41, einen Kupplungshebel 13, die Öffnungsstellung der Kupplung 1 definiert löst, so daß nicht dargestellte Federn in der Kupplung 1 diese in Richtung Schließen bewegen können. Dabei kann zwischen der vollen Öffnung der Kupplung und dem Anlegepunkt noch eine Eilstrecke vorgesehen sein, so daß die Grund-Einrückgeschwindigkeit $V_{KG}$, die aus der Kennlinie A, Fig. 2, ermittelt ist, erst am Anlegepunkt wirkt. In der ersten Phase des Kuppelvorgangs, nämlich dann, wenn die Änderung der Drehzahl der Getriebe-Eingangswelle 36 erkennbar ist, kann die Grund-Einrückgeschwindigkeit der Kupplung über einen Korrekturfaktor K1, der eine Funktion aus der Änderung der Differenzdrehzahlen $\Delta' n$ ist, verändert werden. Wie beschrieben und wie aus der Darstellung nach Fig. 3 zu ersehen ist, erfolgt diese Korrektur nur dann, wenn infolge unterschiedlich wirkender Anfahrwiderstände die Drehzahlen der Motor-Abtriebswelle 23 und der Getriebe-Eingangswelle 36 sich in einer nicht gewünschten Entwicklung verändern. Infolge der zunehmenden Kuppelung zwischen den Reibflächen 14, 15 der Kupplung 1 wird die GetriebeEingangswelle 36 weiter beschleunigt. Diese Lastübernahme des Antriebsmotors 2 führt zu einer Reduzierung des Drehzahlanstieges der Motor-Abtriebswelle 23 und im weiteren Verlauf zu einem Drehzahlabfall - siehe Kurve 1M, 2M in Fig. 7 -. Mit einem weiteren Korrekturfaktor K2 nach Fig. 4 kann der Drehzahlabfallgradient der Motordrehzahl zur Erzielung einer weiteren qualitativen Verbesserung des Anfahrvorganges beeinflußt werden. Die Kennlinie C in Fig. 4 ist dabei so gestaltet, daß bei einer positiven Änderung der Motordrehzahl keine Korrektur der Einrückgeschwindigkeit $V_K$ erfolgt. Bei gleichbleibender Motordrehzahl und bei einem geringen Abfall dieser Drehzahl, also einer negativen Änderung der Motordrehzahl, verbleibt die Kupplung 1 in der bestehenden Einrückstellung und nur bei einem zu starken Drehzahlabfall wird eine negative Einrückgeschwindigkeit, also eine leichte Wiederöffnung der Kupplung, wirksam, so daß die Motordrehzahl etwa einen Verlauf nach der Kurve 2M, Fig. 7, nimmt. Zur weiteren qualitativen Verbesserung des Kuppelvorganges wird kurz vor Erreichen der Synchrondrehzahl am Synchronpunkt S nach Fig. 7 die Kupplung nochmals in Abhängigkeit von der Änderung der Differenzdrehzahlen geöffnet. Der Zeitpunkt der Öffnung wird nach Fig. 5 über die Kennlinie D und die Öffnungsgeschwindigkeit nach Fig. 6 über die Kennlinie E, die beide im elektronischen Steuergerät 6 gespeichert sind, ermittelt. Alle Veränderungen der Einrückgeschwindigkeit $V_K$ infolge der Multiplikation mit der Grund-Einruckgeschwindigkeit $V_{KG}$ von K1 und der Einrückgeschwindigkeit mit K2 sowie die Befehle für das Wiederöffnen der Kupplung kurz vor dem Synchronpunkt S und die Öffnungsgeschwindigkeit werden auf dem gleichen Wege wie die Grund-Einrückgeschwindigkeit von dem elektronischen Steuergerät 6 über die Steuereinrichtung 5 an die Stelleinrichtung 4 und von dort an die Kupplung 1 geleitet. Anstelle der Steuereinrichtung 5 und Stelleinrichtung 4 kann auch ein Stellmotor 9 angeordnet sein, der sofort das vom elektronischen Steuergerät kommende elektrische Signal in eine mechanische Bewegung auf den Kupplungshebel umwandelt.

## Bezugszeichen

| | |
|---|---|
| 1 | Kupplung |
| 11 | Wegmeßeinrichtung |
| 12 | Leitung |
| 13 | Kupplungshebel |
| 14 | Reibfläche |
| 2 | Antriebsmotor |
| 21 | Drehzahlfühler $n_M$ |
| 22 | Drosselklappe/Einspritzpumpe |
| 23 | Motor-Abtriebswelle |
| 3 | Getriebe |
| 30 | Hydraulik-/Luftleitung |
| 31 | Drehzahlfühler $n_{GE}$ |
| 32 | Drehzahlfühler $n_{ab}$ |
| 33 | Gangrückmeldung |
| 34 | Elektrische Leitung |
| 35 | Schaltventilblock |
| 36 | Getriebe-Eingangswelle |
| 37 | Getriebe-Abtriebswelle |
| 4 | Stelleinrichtung |
| 41 | Betätigungsstange |
| 5 | Steuereinrichtung |
| 50 | Luft- oder Hydraulikleitung |
| 51 | Luft- oder Hydraulikleitung |
| 6 | Elektronisches Steuergerät |
| 61 | Leitungen |
| 62 | Leitungen |
| 63 | Leitungen |
| 64 | Leitungen |
| 65 | Leitungen |
| 7 | Gaspedal |
| 71 | Leitungen |
| 72 | Leitungen |

| 75 | Elektronische Gasbetätigung (E-Gas) |
| 8 | Fahrschalter |
| 81 | Leitung |
| 9 | Stellmotor |
| | |
| A | Kennlinie für die Grund-Einrückgeschwindigkeit |
| B | Kennlinie für den Korrekturfaktor nach Änderung der Differenzdrehzahl |
| C | Kennlinie für den Korrekturfaktor nach Änderung der Motordrehzahl |
| D | Kennlinie für den Öffnungszeitpunkt der Kupplung |
| E | Kennlinie für die Öffnungsgeschwindigkeit |
| 1M | Ist-Kurve Motordrehzahl, Stand der Technik |
| 1G | Ist-Kurve Getriebedrehzahl, Stand der Technik |
| G | Ist-Kurve Gaspedalverstellung |
| E | Ist-Kurve E-Gas |
| 2M | Ist-Kurve Motordrehzahl |
| 2G | Ist-Kurve Getriebe-Eingangsdrehzahl |
| $V_{KG}$ | Grund-Einrückgeschwindigkeit |
| $V_K$ | Einrückgeschwindigkeit |
| K1 | Korrekturfaktor |
| K2 | Korrekturfaktor |
| $n_{M\,max}$ | Maximale Motordrehzahl |
| S | Synchronpunkt |
| | |
| $\Delta \dot{n}$ | Änderung der Differenzdrehzahl |
| $\Delta n_M$ | Änderung der Motordrehzahl |
| $\Delta n$ | Änderung der Drehzahl |
| $n_{GE}$ | Getriebe-Eingangsdrehzahl |
| $n_M$ | Motordrehzahl |
| $n_{ab}$ | Getriebe-Abtriebsdrehzahl |

## Ansprüche

1. Verfahren zur Steurung einer automatischen Kraftfahr-zeugkupplung (1), die zwischen einem Antriebsmotor (2) und einem Getriebe (3) angeordnet ist und vorrangig als Anfahrkupplung wirkt mit einer Steuereinrichtung (5), die ein von einem elektronischen Steuergerät (6) kommendes elektrisches Signal in eine Steuergröße für eine Stelleinrichtung (4) zum Öffnen und Schließen der Kupplung umwandelt, dadurch **gekennzeichnet,** daß beim Anfahren das Schließen der Kupplung (1) in einer ersten Phase sofort mit einer von einer Motorführungsgröße, z. B. der Stellung des Gaspedals (7) abhängigen Grundeinrückgeschwindigkeit($V_{KG}$) erfolgt und die Anpassung in weiteren Phasen über Korrekturen während des gesamten Kuppelvorganges erfolgt.

2. Verfahren nach Anspruch 1, dadurch **gekennzeichnet,** daß die z. B. gaspedal-abhängige Grund-Einrückgeschwindigkeit ($V_{KG}$) aus einer Kennlinie (A), die im elektronischen Steuergerat (6) gespeichert ist und nach einer gegebenen Motor-Charakteristik erstellt wurde, abeleitet wird.

3. Verfahren nach Anspruch 2, dadurch **gekennzeichnet,** daß die beim Anfahren unterschiedlichen Anfahrwiderstände über die Stellung des Gaspedales (7) hinaus durch einen Korrekturfaktor (K1) berücksichtigt werden, wobei der Korrekturfaktor (K1) aus der Änderung der Differenzdrehzahl ($\Delta \dot{n}$) zwischen der Motordrehzahl ($n_M$) und der Getriebe-Eingangsdrehzahl ($n_{GE}$) gebildet mit der Grund-Einrückgeschwindigkeit ($V_{KG}$) multipliziert wird und in einer zweiten Phase des Kuppelvorganges zur Einrückgeschwindigkeit ($V_K$) der Kupplung (1) führt.

4. Verfahren nach Anspruch 3, dadurch **gekennzeichnet,** daß nach Erreichen der maximalen Motordrehzahl ($n_{Mmax}$) während des Einkuppelvorganges die Einrückgeschwindigkeit ($V_K$) mit einem aus der Änderung der Motordrehzahl ($\Delta n_M$) ermittelten Korrekturfaktor (K2) multipliziert und damit der Motor-Drehzahlgradient beeinflußt wird.

5. Verfahren nach Anspruch 4, dadurch **gekennzeichnet,** daß kurz vor Erreichen der Synchrondrehzahl die Kupplung (1) nochmals in Abhängigkeit von der Änderung der Differenzdrehzahl ($\Delta \dot{n}$) mit einer definierten Geschwindigkeit geöffnet wird.

6. Verfahren nach Anspruch 3, dadurch **gekennzeichnet,** daß der Korrekturfaktor (K1), der aus der Änderung der Differenzdrehzahl ($\Delta \dot{n}$) ermittelt wird, in einer Kennlinie (B) im elektronischen Steuergerät (6) abgespeichert und so gestaltet ist, daß bei einer Multiplikation mit der Grund-Einrückgeschwindigkeit ($V_{KG}$) eine definierte Reibarbeit in der Kupplung (1) infolge unterschiedlicher Anfahrwiderstände - Beladung, Fahrbahn und Fahrbahnprofil - nicht überschritten wird.

7. Verfahren nach Anspruch 6, dadurch **gekennzeichnet,** daß bei einer geringfügigen Abweichung der linderung der Differenzdrehzahl ($\Delta \dot{n}$) im Ist keine Korrektur der Grund-Einrückgeschwindigkeit ($V_{KG}$) erfolgt und die Einrückgeschwindigkeit für die Kupplung (1) bis zur maximalen Motordrehzahl ($n_{Mmax}$) während des Einkuppelvorganges wirkt.

8. Verfahren nach Anspruch 4, dadurch **gekennzeichnet,** daß der Korrekturfaktor (K2), der nach Erreichen der maximalen Motordrehzahl ($n_{Mmax}$) während des Kuppelvorganges wirksam wird, in einer Kennlinie (C) im elektronischen Steuergerät (6) gespeichert ist und daß die Kennlinie (C) so gestaltet ist, daß während einer positiven Änderung der Motordrehzahl ($n_M$) keine Korrektur der Einrückgeschwindigkeit ($V_K$) erfolgt, bei lonstanter und geringfügig abfallender Motordrehzahl ($n_M$) die Kupplung in dre bestehenden Schließstellung verbleit und bei einem zu starken Absinken der Motordrehzahl eine negative Einrückgeschwindigkeit ($-V_K$) wirkt und die Kupplung in Richtung Öffnen bewegt wird.

9. Verfahren nach Anspruch 5, dadurch **gekennzeichnet,** daß der Beginn wie auch die Öffnungsgeschwindigkeit – negative Einrückgeschwindigkeit – je in einer Kennlinie (D, E) im elektronischen Steuergerät (6) gespeichert sind und daß die Kennlinie (D) für das Öffnen eine Funktion aus der Änderung der Drehzahlen ($\Delta n = n_M - n_{GE}$) und aus der Änderung der Differenzdrehzahl ($\Delta \dot{n}$) ist und für die Öffnungsgeschwindigkeit eine Funktion aus der negativen Einrückgeschwindigkeit ($-V_K$) und der Änderung der Differenzdrehzahlen ($\Delta \dot{n}$) ist.

10. Verfahren nach Anspruch 1, dadurch **gekennzeichnet,** daß die Steuereinrichtunt (5) ein implusmodulationsgesteuertes Magnetventil ist, von dem aus eine Hilfskraft zur Stelleinrichtung (4) geleitet wird.

11. Verfahren nach Anspruch 1, dadurch **gekennzeichnet,** daß die Steuereinrichtung (5) ein Stellmotor (9) ist, der das elektrische Signal aus dem elektronischen Steuergerät (6) direkt in eine lineare Bewegung zur Verstellung der Kupplung am Kupplungshebel (13) umsetzt.

## Claims

1. A method for controlling an automatic motor vehicle clutch (1), which is arranged between a driving motor (2) and a gearbox (3) and acts predominantly as a starting clutch comprising a control device (5), which converts an electrical signal produced by an electronic control apparatus (6) into a control value for an adjusting device (4) for opening and closing the clutch, characterised in that, upon starting, the closing of the clutch (1) is effected immediately in a first phase at a basic engaging velocity ($V_{KG}$) which is a function of an engine reference value, e.g. the position of the gas pedal (7), and the adaptation is effected by corrections in further phases during the overall coupling procedure.

2. A method according to claim 1, characterised in that the basic engaging velocity ($V_{KG}$), which is, for example, gas pedaldependent, is derived from a characteristic curve (A), which is stored in the electronic control apparatus (6) and is determined according to a given engine characteristic.

3. A method according to claim 2, characterised in that, in addition to the position of the gas pedal (7), the different starting resistances during starting are taken into account by a correction factor (K1), the latter (K1) being formed from the change in the differential rotational speed ($\Delta \dot{n}$) between the engine speed ($n_M$) and the initial gearbox speed ($n_{GE}$), multiplied by the basic engaging velocity ($V_{KG}$) and leading in a second phase of the coupling procedure to the engaging velocity ($V_K$) of the clutch (1).

4. A method according to claim 3, characterised in that once the maximum engine speed ($n_{Mmax}$) has been reached during the coupling procedure, the engaging velocity ($V_K$) is multiplied by a correction factor (K2) derived from the change in the engine rotational speed ($\Delta n_M$) and the engine rotational speed gradient is thereby influenced.

5. A method according to claim 4, characterised in that shortly before the synchronous rotational speed is reached, the clutch (1) is again opened at a defined velocity as a function of the change in the differential rotational speed ($\Delta \dot{n}$).

6. A method according to claim 3, characterised in that the correction factor (K1), which is determined from the change in the differential rotational speed ($\Delta \dot{n}$), is stored in a characteristic curve (B) in the electronic control apparatus (6) and is formed in such a manner that upon multiplication with the basic engaging velocity ($V_{KG}$), a defined level of friction in the clutch (1) resulting from different starting resistances-loading, roadway and roadway profile - is not exceeded.

7. A method according to claim 6, characterised in that when there is a slight deviation in the change differential rotational speed ($\Delta \dot{n}$), there is no correction of the basic engaging velocity ($V_{KG}$) and the engaging velocity for the clutch (1) is effected during the coupling procedure up to maximum engine speed ($n_{Mmax}$).

8. A method according to claim 4, characterised in that the correction factor (K2), which becomes effective after the maximum engine speed ($n_{Mmax}$) has been reached, is stored in a characteristic curve (C) in the electronic control apparatus (6), and the characteristic curve (C) is formed in such a manner that during a positive change in the engine rotational speed ($n_M$), there is no correction of the engaging velocity ($V_K$), during a constant and slightly decreasing engine speed ($n_M$), the clutch remains in the existing closed position and during an excessively large decrease in the engine speed ($n_M$), a negative engaging velocity (-VK) becomes effective and the clutch is moved in the direction of opening.

9. A method according to claim 5, characterised in that the start and also the opening velocity - negative engaging velocity - are each stored in a characteristic curve (D, E) in the electronic control apparatus (6) and the characteristic curve (D) for opening is a function of the change in rotational speeds ($\Delta n = n_M - n_{GE}$) and the change in the differential rotational speed ($\Delta \dot{n}$) and for the opening velocity is a function of the negative engaging velocity (-VK) and the change in differential rotational speeds ($\Delta \dot{n}$).

10. A method according to claim 1, characterised in that the control device (5) is a pulse-modulation controlled magnetic valve, from which an auxiliary power is conveyed to the adjusting device (4).

11. A method according to claim 1, characterised in that the control device (5) is a servomotor (9), which converts the electrical signal from the electronic control apparatus (6) directly into a linear movement for the adjustment of the clutch at the clutch pedal (13).

## Revendications

1. Procédé pour commander un embrayage automatique (1) disposé entre un moteur de traction (2) et une boîte de vitesses (3) dans un véhicule à moteur et servant principalement d'embrayage de démarrage, avec une unité de commande (5) qui convertit un signal électrique venant d'un appareil électronique de commande (6) en une grandeur de commande d'une unité de manoeuvre (4) pour ouvrir et fermer l'embrayage, caractérisé en ce que, lors du démarrage, la fermeture de l'embrayage (1) est effectuée, dans une première phase, tout de suite à une vitesse de base d'engagement ($V_{KG}$) dépendant d'une grandeur de commande du moteur, par exemple la position de la pédale d'accélérateur (7), et en ce que l'ajustement est effectué dans d'autres phases par des corrections pendant tout le processus d'embrayage.

2. Procédé selon la revendication 1, caractérisé en ce que la vitesse de base d'engagement ($V_{KG}$), dépendant par exemple de la pédale d'accélérateur, est dérivée d'une courbe caractéristique (A) qui est mémorisée dans l'appareil électronique de commande (6) et qui a été établie d'après une caractéristique donnée du moteur.

3. Procédé selon la revendication 2, caractérisé en ce que les différentes résistances au démarrage sont prises en considération au moyen de la position de la pédale d'accélérateur (7) à l'aide d'un facteur de correction (K1) qui est basé sur la variation ($\Delta \dot{n}$) entre la vitesse du moteur ($n_M$) et la vitesse à l'entrée de la boîte ($n_{GE}$), ce facteur (K 1) étant utilisé pour multiplier la vitesse de base d'engagement ($V_{KG}$) et donnant la vitesse d'engagement ($V_K$) de l'embrayage (1) dans une deuxième phase du processus d'embrayage.

4. Procédé selon la revendication 3, caractérisé en ce que, une fois que la vitesse maximale du moteur ($n_{Mmax}$) a été atteinte pendant le processus d'embrayage, la vitesse d'engagement ($V_K$) est multipliée par un facteur de correction (K2) déterminé à partir de la variation de la vitesse du moteur ($\Delta n_M$), de sorte que le gradient de vitesse du moteur est influencé.

5. Procédé selon la revendication 4, caractérisé en ce que, peu avant que la vitesse synchrone soit atteinte, l'embrayage (1) est rouvert à une vitesse prédéfinie, en fonction de la variation ($\Delta \dot{n}$) de la différence de vitesse.

6. Procédé selon la revendication 3, caractérisé en ce que le facteur de correction (K1) déterminé à partir de la variation ($\Delta \dot{n}$) de la différence de vitesse est mémorisé dans l'appareil électronique de commande (6) sous la forme d'une courbe caractéristique (B) et est conçu de manière que, par sa multiplication avec la vitesse de base d'engagement ($V_{KG}$), une valeur déterminée du travail de friction dans l'embrayage (1) en raison de différentes résistances au démarrage - charge, chaussée et profil de la chaussée - ne soit pas dépassée.

7. Procédé selon la revendication 6, caractérisé en ce que, en cas d'écart minime de la variation ($\Delta \dot{n}$) de la différence de vitesse en valeur réelle, la vitesse de base d'engagement ($V_{KG}$) n'est pas corrigée et la vitesse d'engagement de l'embrayage (1) est effective jusqu'à la vitesse maximale du moteur ($n_{Mmax}$) pendant le processus d'embrayage.

8. Procédé selon la revendication 4, caractérisé en ce que le facteur de correction (K2), qui devient applicable une fois que la vitesse maximale du moteur ($n_{Mmax}$) a été atteinte pendant le processus d'embrayage, est mémorisé dans l'appareil électronique de commande (6) sous la forme d'une courbe caractéristique (C) et en ce que cette courbe (C) est congrue de manière que, pendant une variation positive de la vitesse du moteur ($n_M$), la vitesse d'engagement ($V_K$) ne soit pas corrigée, qu'en cas de vitesse du moteur ($n_M$) constante ou faiblement décroissante, l'embrayage reste dans la position existante de fermeture, et qu'en cas de trop forte chute de la vitesse du moteur, une vitesse d'engagement négative ($-V_K$) intervienne et que l'embrayage soit manoeuvré dans le sens de l'ouverture.

9. Procédé selon la revendication 5, caractérisé en ce que le début et la vitesse de ladite ouverture - vitesse d'engagement négative - sont mémorisés dans l'appareil électronique de commande (6), chacun sous la forme d'une courbe caractéristique (D, E), en ce que la courbe caractéristique (D) du début d'ouverture est une fonction liant ladite différence de vitesse ($\Delta n = n_M - n_{GE}$) et la variation ($\Delta \dot{n}$) de la différence de vitesse, et en ce que la courbe caractéristique de la vitesse d'ouverture est une fonction liant la vitesse d'engagement négative ($-V_K$) et la variation ($\Delta \dot{n}$) de la différence de vitesse.

10. Procédé selon la revendication 1, caractérisé en ce que l'unité de commande (5) est une électrovanne commandée par modulation par impulsions et transmettant une force d'assistance à l'unité de manoeuvre (4).

11. Procédé selon la revendication 1, caractérisé en ce que l'unité de commande (5) est un servomoteur (9) qui convertit le signal électrique venant de l'appareil électronique de commande (6) directement en un mouvement linéaire du levier d'embrayage (13) pour ajuster la position de l'embrayage.

FIG.1

FIG.2

FIG.3

FIG.4

FIG.5

FIG.6

FIG.7